# EUROPEAN PATENT APPLICATION

(11) **EP 2 889 361 A1**
(43) Date of publication of application: **01.07.2015**
(21) Application number: 14200496.9
(22) Date of filing: 29.12.2014
(51) Int. Cl.: C10L 1/08

(54) **Diesel fuel formulation and use thereof**

(30) Priority: 31.12.2013 EP 13199906
(71) Applicant: Shell Internationale Research Maatschappij B.V., 2596 HR Den Haag (NL)
(72) Inventor: Landschof, Jörg, 21107 Hamburg (DE)
(74) Representative: Matthezing, Robert Maarten

(57) **Abstract**

A fuel composition is provided comprising a hydrocarbon blend, the hydrocarbon blend comprising: (a) between 60 and 70 vol% of Fischer-Tropsch derived fuel component, (b) between 20 and 30 vol% of a naphthenic base oil, and (c) between 9 and 11 vol% of a bio-derived diesel component, said fuel composition having a cetane number of at least 68.

## Description

### Field of the Invention

The present invention relates to a fuel composition suited for compression ignition engines, particularly to racing fuels.

### Background of the Invention

Fuel compositions suited for compression ignition engines are sometimes also referred to as diesel fuel. There is a trend in car racing to compete with cars having a compression ignition engine. Special interest exists to participate with such cars in endurance racing. In such races the competing cars will run for a specific time, up to 24 hours, on a race track and the car which makes the most laps wins. In such races pit stops are allowed for refuelling.

Starting 2014 new FIA / ACO technical regulations come into effect that will have a significant impact on the FIA WEC (World Endurance Championship) race series in terms of new engine technologies and new race fuels. Core basis of the new regulations is the efficiency focus - this means limited amount of energy in MJ/lap and the doubling of the bio fuel content in comparison to the currently used race fuels. For 2014 onwards the bio diesel content will increase to 10 Vol%. The bio diesel must be oxygen free.

Therefore it is important for these racing fuel compositions to deliver engine efficiency and power improvement and reliable operation of new WEC engine design as well as to represent 2017+ road fuel properties, e.g. bio mandates to enable road relevance.

The above attributes of the racing fuel would also be attractive to drivers of cars used on the highway. One object is thus also to obtain a racing fuel, which will comply with the governmental specifications for diesel fuel, such as DIN EN 590 (Arctic) in Europe. Another object is to provide a racing fuel that meets regulations for certain endurance races, such as the Le Mans 24 Hour endurance race. In this manner an improved fuel is obtained which may also find use as a consumer product for normal use, other than as a racing fuel.

### Summary of the Invention

In one embodiment a fuel composition is provided comprising a hydrocarbon blend, the hydrocarbon blend including (a) between 60 and 70 vol% of Fischer-Tropsch derived fuel component, (b) between 20 and 30 vol% of a naphthenic base oil, and (c) between 9 and 11 vol% of a bio-derived diesel component, said fuel composition having a cetane number of at least 68. In certain embodiments, the fuel composition may have a kinematic viscosity at 40°C of greater than 3.0 cSt (mm²/s) and a density at 15°C of greater than 780 kg/m³.

In certain embodiments, the fuel composition further includes between 1000 and 2000 mg/kg of a cetane enhancer. In other embodiments, component (a) is present in an amount between 62 and 68 vol%. In yet other embodiments, component (b) is present in an amount between 22 and 28 vol%. In alternate emobidments, component (c) is present in an amount between 9.5 and 10.5 vol%. In certain embodiments, component (a) comprises at least 95 wt% paraffins. In certain embodiments, component (a) comprises a sulfur content of 10 ppmw or less, preferably 2 ppmw or less. In certain embodiments, component (c) is a hydrogenated vegetable oil.

In certain embodiments, the fuel composition has a kinematic viscosity at 40°C of greater than 3.0 cSt (mm²/s). Preferably, the fuel composition has a density at 15°C of at least 780 kg/m³, more preferably from 780 to 845 kg/m³. In one embodiment, the fuel composition has a density at 15°C of from 780 and 800 kg/m³. In another embodiment, the fuel composition has a density at 15°C of from 800 kg/m³ and 845 kg/m³, preferably from 800 to 820kg/m³. In yet another embodiment, the fuel composition can include ethylhexyl nitrate as a cetane enhancer, which is preferably present in a concentration of between 1000 and 2000 mg/kg of fuel composition.

In another aspect, the invention includes the use of the fuel composition described herein in a direct injection engine, preferably in a racing engine. In certain embodiments, any of the fuel compositions described herein can be used in a racing engine for an endurance race, preferably lasting between 5 and 30 hours.

In another aspect, the invention includes a method for the preparation of a fuel composition, the method comprising blending (a) between 60 and 70 vol% of a Fischer-Tropsch derived fuel component; (b) between 20 and 30 vol% of a naphthenic base oil, and (c) between 9 and 11 vol% of a bio-derived diesel component to produce a diesel fuel composition having a density of at least 780 kg/m³ and a cetane number of at least 68.

In another embodiment a fuel composition is provided comprising a hydrocarbon blend having a cetane number of at least 68, a kinematic viscosity at 40°C of greater than 3.0 cSt (mm²/s) and a density at 15°C of between 780 and 820 kg/m³, wherein the fuel composition comprises (a) a Fischer-Tropsch derived paraffinic fuel boiling in the gas oil range comprising more than 95 wt % paraffins and having a cetane number of between 70 and 85 in combination; (b) a naphthenic base oil and (c) a bio-derived diesel fuel component.

### Detailed Description

### Definitions

As used herein the following terms shall have the following meanings:
As used herein, reference to a gas oil includes use as a diesel fuel. The majority of components will have boiling points within the range of a typical diesel fuel (i.e., from about 150 to 400°C, alternatively between about 170 and 370°C. Typically, the fuel will have a 90% distillation temperature within the range of 300 to 370°C.

Fuel compositions of the present invention include a Fischer-Tropsch derived fuel component in an amount of between 60 and 70 vol%, alternatively between 62 and 68 vol%, alternatively between 63 and 67 vol%, alternatively between 64 and 66 vol%, or alternatively between 64.5 and 65.5 vol%. The fuel composition will also include a naphthenic fuel component, such as a naphthenic base oil, in an amount of between 20 and 30 vol%, alternatively between 22 and 28 vol%, alternatively between 23 and 27 vol%, alternatively between 24 and 26 vol%, or alternatively between 24.5 and 25.5 vol%. The fuel composition will also include a bio-derived component in an amount of between 9 and 12 vol%, alternatively between 9 and 11 vol%, alternatively between 9.5 and 10.5 vol%. In certain embodiments, the fuel composition will include at least 9 vol%, alternatively at least 10 vol% of a bio-derived fuel component. Optionally, the fuel compositions of the present invention can include between 1000 and 2000 ppmw of an ignition or cetane enhancer, such as ethylhexyl nitrate (EHN), alternatively between 1200 and 1700 ppmw, alternatively between 1300 and 1500 ppmw.

It has now been found that the following fuel composition is an excellent racing fuel for use in compression ignition engines. Thus, a fuel composition according to the present invention comprises a hydrocarbon blend having a cetane number of at least 68, a kinematic viscosity at 40°C of greater than 3.0 cSt (mm2/s) and a density at 15°C of between 780 and 820 kg/m³.

It has been found that fuel compositions according to the present invention perform well in terms of improved engine efficiency, power and fuel consumption by mass when compared to the typical consumer fuels.

The fuel composition preferably has a density at 15°C of below 830 kg/m³, alternatively less than 820 kg/m³ and alternatively less than 810 kg/m³. The cetane number, as measured according to DIN 51773, is at least 68, alternatively at least about 70. The upper limit of the cetane number will be determined by the compositional constraints of the base fuels used to formulate such a composition and the cetane improver additives present in the formulation. A practical upper limit will be 80. In certain embodiments the cetane number will be between 68 and 75, alternatively between 68 and 72. The aromatic content, as determined by IP 391, will typically be below 30 wt % and preferably less than 20 wt %. Compositions having between 5 and 20 wt % of aromatics have been found suited as racing fuel. The content of di/tri and poly-aromatics in the composition as determined by IP 391 is preferably less than 11% and more preferably less than 5%. The pour point, cloud point and cold filter plugging point (CFPP) of the fuel composition will depend on the climate conditions in which the fuel composition will be used. The values for all these properties may range from minus 40°C to +5°C. The fuel composition may have a 90% v/v distillation temperature (T90) of from 300 to 370°C, preferably below 360°C and more preferably between 310 and 360°C. The kinematic viscosity at 40°C is preferably less than 4.5 cSt (mm²/s) in order to meet the governmental specifications.

The fuel composition preferably comprises one or more additives. Examples of suitable additives are lubricity enhancers; dehazers, e.g. alkoxylated phenol formaldehyde polymers; anti-foaming agents (e.g. polyether-modified polysiloxanes); ignition improvers (cetane improvers, such as, 2-ethylhexyl nitrate (EHN), cyclohexyl nitrate, di-tert-butyl peroxide and those disclosed in U.S. Pat. No. 4,208,190 at column 2, line 27 to column 3, line 21); anti-rust agents (e.g. a propane-1,2-diol semi-ester of tetrapropenyl succinic acid, or polyhydric alcohol esters of a succinic acid derivative, the succinic acid derivative having on at least one of its alpha-carbon atoms an unsubstituted or substituted aliphatic hydrocarbon group containing from 20 to 500 carbon atoms, e.g. the pentaerythritol diester of polyisobutylene-substituted succinic acid); corrosion inhibitors; reodorants; anti-wear additives; antioxidants (e.g. phenolics such as 2,6-di-tert-butylphenol, or phenylenediamines such as N,N'-di-sec-butyl-p-phenylenediamine); metal deactivators; and combustion improvers.

The fuel compositions can also include a detergent. By detergent is meant an agent (frequently a surfactant) which can act to remove, and/or to prevent the build up of combustion related deposits within the engine, in particular the fuel injection system (such as the injector nozzles). Examples of detergents suitable for use in fuel additives for the present purpose include polyolefin substituted succinimides or succinamides of polyamines, for instance polyisobutylene succinimides or polyisobutylene amine succinamides, aliphatic amines, Mannich bases or amines and polyolefin (e.g. polyisobutylene) maleic anhydrides. Succinimide dispersant additives are described, for example, in GB-A-960493, EP-A-0147240, EP-A-0482253, EP-A-0613938, EP-A-0557516 and WO-A-98/42808. Particularly preferred are polyolefin substituted succinimides such as polyisobutylene succinimides.

In certain embodiments, the fuel composition can include a lubricity enhancer additive in order to improve the Wear Scar value (HFRR) of the fuel. Preferably, the content of lubricity additive is such that the Wear Scar value of the fuel composition has a resultant value of below 300 microns (µm). The content of lubricity additive needed to achieve such values will depend on the lubricity of the base fuels used to formulate the fuel composition according to the present invention. In certain fuel compositions wherein the sulphur content is lower than 500 ppmw, the lubricity additive is preferably present at a concentration of between 50 and 1000 ppmw, preferably between 100 and 1000 ppmw.

Suitable commercially available lubricity enhancers include ester- and acid-based additives. Other lubricity enhancers are described in the patent literature, in particular in connection with their use in low sulphur content diesel fuels, for example in: the paper by Danping Wei and H. A. Spikes, "The Lubricity of Diesel Fuels", Wear, III (1986) 217-235; WO-A-95/33805--cold flow improvers to enhance lubricity of low sulphur fuels; WO-A-94/17160--certain esters of a carboxylic acid and an alcohol wherein the acid has from 2 to 50 carbon atoms and the alcohol has 1 or more carbon atoms, particularly glycerol monooleate and di-isodecyl adipate, as fuel additives for wear reduction in a diesel engine injection system; U.S. Pat. No. 5,490,864--certain dithiophosphoric diester-dialcohols as anti-wear lubricity additives for low sulphur diesel fuels; and WO-A-98/01516--certain alkyl aromatic compounds having at least one carboxyl group attached to their aromatic nuclei, to confer anti-wear lubricity effects particularly in low sulphur diesel fuels.

The fuel composition as described above having the unique combination of a relatively high calorific value by mass and viscosity in combination with a relatively high cetane number may be suitably obtained by blending (a) a Fischer-Tropsch derived fuel component boiling in the gas oil range, (b) a naphthenic rich blending component boiling in the gas oil range, and (c) a bio-derived diesel fuel component.

Component (a) is a Fischer-Tropsch derived fuel having a high paraffin content. Fischer-Tropsch derived fuel in the context of the present invention is meant a composition comprising more than 80 wt % paraffins, more preferably more than 90 wt % paraffins, and even more preferably more than 95 wt % paraffins, and even more preferably greater than 98 wt %. The iso to normal ratio of the paraffins as present in the Fischer-Tropsch derived fuel is preferably greater than 0.3, more preferably greater than 1, even more preferably greater than 3. In certain embodiments, the Fischer-Tropsch derived fuel may comprise substantially only isoparaffins.

The iso to normal ratio and the paraffin content of the Fischer-Tropsch derived fuel in the context of the present invention are measured by means of comprehensive multi-dimensional gas chromatography (GCxGC), as described in P. J. Schoenmakers, J. L. M. M. Oomen, J. Blomberg, W. Genuit, G. van Velzen, J. Chromatogr. A, 892 (2000) p. 29 and further.

The Fischer-Tropsch derived fuel can have a density from 760 to 790 kg/m³ at 15°C; a cetane number (DIN 51773) greater than 68, alternatively greater than 70, alternatively between about 68 and 75, alternatively between about 68 and 72; a kinematic viscosity from 2.0 to 4.5, preferably from 2.5 to 4.0, more preferably from 2.9 to 3.7, cSt (mm²/s) at 40°C; and a sulphur content of 5 ppmw (parts per million by weight) or less, preferably of 2 ppmw or less.

The paraffin fuel components may be obtained by oligomerisation of lower boiling olefins. More preferably, the Fischer-Tropsch derived fuel component is prepared by means of a Fischer-Tropsch condensation process. The Fischer-Tropsch reaction converts carbon monoxide and hydrogen into longer chain, usually paraffinic, hydrocarbons:

n(CO+2H₂) → (--CH₂--)ₙ+nH₂O+heat,

in the presence of an appropriate catalyst and typically at elevated temperatures (e.g. 125 to 300°C, preferably 175 to 250°C) and/or pressures (e.g. 500 to 10000 kPa, preferably 1200 to 5000 kPa). Hydrogen:carbon monoxide ratios other than 2:1 may be employed if desired.

The carbon monoxide and hydrogen may themselves be derived from organic or inorganic, natural or synthetic sources, typically either from coal, biomass, for example wood chips and organic waste, bituminous oils, natural gas or from organically derived methane.

A gas oil product may be obtained directly from this reaction, or indirectly for instance by fractionation of a Fischer-Tropsch synthesis product or from a hydrotreated Fischer-Tropsch synthesis product. Hydrotreatment can involve hydrocracking to adjust the boiling range (see, e.g. GB-B-2077289 and EP-A-0147873) and/or hydroisomerisation, which can improve cold flow properties by increasing the proportion of branched paraffins. EP-A-0583836 describes a two-step hydrotreatment process in which a Fischer-Tropsch synthesis product is firstly subjected to hydroconversion under conditions such that it undergoes substantially no isomerisation or hydrocracking (this hydrogenates the olefinic and oxygen-containing components), and then at least part of the resultant product is hydroconverted under conditions such that hydrocracking and isomerisation occur to yield a substantially paraffinic hydrocarbon fuel. The desired gas oil fraction(s) may subsequently be isolated for instance by distillation.

The paraffinic gas oil is preferably obtained in a process which involves a step where the paraffins are catalytically isomerized, to a substantially 100% isoparaffinic fuel, in the presence of a suitable catalyst comprising a medium pore size zeolite and a noble metal hydrogenation component. It has been found that the gas oils as obtained have excellent lubricity values. This would allow the formulator of the fuel composition to use less of the lubricity additive. An example of a process to make such a paraffinic gas oil component is described in WO-A-03/070857.

Typical catalysts for the Fischer-Tropsch synthesis of paraffinic hydrocarbons comprise, as the catalytically active component, a metal from Group VIII of the periodic table, in particular ruthenium, iron, cobalt or nickel. Suitable such catalysts are described for example in EP-A-0583836 (pages 3 and 4).

An example of a Fischer-Tropsch based process is the SMDS (Shell Middle Distillate Synthesis) described in "The Shell Middle Distillate Synthesis Process", van der Burgt et al (paper delivered at the 5th Synfuels Worldwide Symposium, Washington D.C., November 1985; see also the November 1989 publication of the same title from Shell International Petroleum Company Ltd., London, UK). This process (also sometimes referred to as the Shell.TM. "Gas-to-Liquids" or "GTL" technology) produces middle distillate range products by conversion of a natural gas (primarily methane) derived synthesis gas into a heavy long-chain hydrocarbon (paraffin) wax which can then be hydroconverted and fractionated to produce liquid transport fuels such as the gas oils useable in diesel fuel compositions. A version of the SMDS process, utilizing a fixed-bed reactor for the catalytic conversion step, is currently in use in Bintulu, Malaysia and its products have been blended with petroleum derived gas oils in commercially available automotive fuels.

Gas oils prepared by the SMDS process are commercially available from Shell companies. Further examples of Fischer-Tropsch derived gas oils are described in EP-A-0583836, EP-A-1101813, WO-A-97/14768, WO-A-97/14769, WO-A-00/20534, WO-A-00/20535, WO-A-00/11116, WO-A-00/11117, WO-A-01/83406, WO-A-01/83641, WO-A-01/83647, WO-A-01/83648 and U.S. Pat. No. 6,204,426.

By virtue of the Fischer-Tropsch process, a Fischer-Tropsch derived gas oil has essentially no, or undetectable levels of, sulphur and nitrogen. Compounds containing these heteroatoms tend to act as poisons for Fischer-Tropsch catalysts and are therefore removed from the synthesis gas feed. Further, the process as usually operated produces no or virtually no aromatic components. The aromatics content of a Fischer-Tropsch gas oil will typically be below 1% w/w, preferably below 0.5% w/w and more preferably below 0.1% w/w.

By virtue of the Fischer-Tropsch process, a Fischer-Tropsch derived fuel component suitable for use in the present invention has essentially no, or undetectable levels of, sulfur and nitrogen. Compounds that include these heteroatoms tend to act as poisons for the Fischer-Tropsch catalysts and are therefore removed from the synthesis gas feed. Accordingly, the products typically have less than 100 ppmw of sulfur and/or nitrogen products, alternatively less than 50 ppmw, alternatively less than 25 ppmw, alternatively less than 10 ppmw, alternatively less than 5 ppmw, alternatively less than 4 ppmw, alternatively less than 3 ppmw.

The addition of Fischer-Tropsch derived fuel components is believed to provide various benefits, including a reduction in, and/or reversal of, injection fouling. Thus, the presence of the Fischer-Tropsch derived fuel component is believed to help maintain and/or improve engine cleanliness. In certain embodiments, use of the fuels of the present invention result in reduced combustion related engine deposits. In certain embodiments, the fuels of the present invention can be used to remove combustion related engine deposits previously deposited. As used herein, "reducing" includes prevention and "removing" includes both complete and partial removal.

Component (b) is a naphthenic component. The naphthenic blending component will comprise a large content of naphthenic components boiling in the gas oil range. Because of this feature the density will be relatively high, preferably above 860 kg/m³. Another typical property of the preferred naphthenic blending component is the low pour point. Preferably the pour point of the blending component is below -30°C and more preferably below -40°C. The content of aromatic compounds is preferably below 30 wt %, more preferably below 20 wt % according to IP 391. Due to the low contribution to the cetane number of naphthenic compounds, the cetane number will be typically lower than 50. The kinematic viscosity at 40°C of the naphthenic blending component is preferably between 6 and 30 cSt (mm²/s).

Naphthenic blending components may be derived from so-called naphthenic crude sources, by hydrogenation of light cycle oils as obtained in a catalytic cracking process. Alternatively the naphthenic compounds may be made by means of a synthetic route. Examples of suitable naphthenic blending components are the commercially available products named Edelex 913 or Shell Oil 4308 as obtainable from Deutsche Shell GmbH.

Component C is a bio-derived diesel fuel.

The fuel composition according to the present invention is particularly applicable where the fuel composition is used or intended to be used in a direct injection diesel engine, for example of the rotary pump, in-line pump, unit pump, electronic unit injector or common rail type, or in an indirect injection diesel engine. The fuel composition may be suitable for use in heavy and/or light duty diesel engines. It has been found that the fuel composition is particularly suited for use as a racing fuel in any one of the above engines. The present invention is also directed to the method of operating a diesel powered car in a race which lasts between 5 and 30 hours, by running the diesel powered car with the fuel composition, wherein the engine can be any of the above described engines, in particular in a race car equipped with a turbocharged direct injection diesel engine and equipped with a so-called advanced common rail injection system working at a rail pressure of above 1600 bar.

Another aspect of the present invention provides a method of operating a diesel engine, and/or a vehicle which is driven by a diesel engine, the method including the step of introducing into a combustion chamber of the engine a diesel fuel composition as described herein, optionally including a cetane enhancer, as also described herein, and combusting said fuel composition. In certain instances, the fuel compositions of the present invention.

In another aspect, the present invention includes a method for preparing the fuel compositions described herein, comprising the step of blending or mixing: (a) a Fischer-Tropsch derived fuel component, (b) a naphthenic base oil component, and (c) a bio-derived fuel component, and optionally including a cetane or ignition enhancer.

The present invention will now be described by way of the following examples which are not intended to limit the scope of the claims:

### Examples

In Table 1, a series of racing fuel blends are provided (Examples 1-5), as well as comparative example Ref.1.

In the tables below B₀ Diesel means FAME-free diesel fuel, GTL means Gas-To-Liquid fuel and HVO means Hydrogenated Vegetable Oil.

**Table 1 Examples 1-5.**

| Example | Ref.1 | Ex.1 | Ex.2 | Ex.3 | Ex.4 | Ex.5 |
|---|---|---|---|---|---|---|
| B₀ Diesel (vol.%) | 63.4 | 64 | 64 | 77 | 77 | 77 |
| Naphthenic base oil (vol.%) | 16.7 | 18 | 18 | 0 | 0 | 13 |
| GTL (vol.%) | 12.2 | 8 | 8 | 13 | 13 | 0 |
| HVO (vol.%) | 7.7 | 10 | 10 | 10 | 10 | 10 |
| Detergent (ppm) | 1156 | 1500 | 1156 | 1156 | 1156 | 1156 |
| Lubricity additive (ppm) | 250 | 250 | 250 | 250 | 250 | 250 |
| Cetane Enhancer (ppm) | | 1500 | 1500 | 1500 | 1500 | 1500 |
| Viscosity improver (ppm) | | | | | 1000 | |

Properties for comparative example Ref.1 are provided in Table 2 below. Properties for fuel blend Examples 1-5 are provided in Table 3 below.

**Table 2. Properties of comparative example Ref.1.**

| Property | Test Method | Value |
|---|---|---|
| Cetane Number | EN ISO 5165 | 58.8 |
| Density (at 15°C) | EN ISO 12185 | 830 kg/m³ |
| Viscosity (at 40°C) | EN ISO 3104 | 3.21 cSt |
| Distillation (250°C) | | 27% v/v |
| Distillation (350°C) | | 96% v/v |
| Distillation (95% vol.) | | 348°C |
| HFRR¹ | EN ISO 12156 | 258 µm |

| | | |
|---|---|---|
| ¹ The HFRR (high frequency reciprocating rig) measures the lubricity of the sample. | | |

**Table 3. Properties of Examples 1-5.**

| Property | Ex.1 | Ex.2 | Ex.3 | Ex.4 | Ex.5 |
|---|---|---|---|---|---|
| Cetane Number | 61.2 | 61.2 | 62 | 62 | 60 |
| Density (at 15°C) (kg/m³) | 831 | 831 | 821 | 821 | 834 |
| Viscosity (at 40°C) (cSt) | 3.22 | 3.22 | 2.72 | 2.9 | 3.12 |
| Distillation (250°C) (% v/v) | 27.1 | 27.1 | 35.9 | 35.8 | 28.3 |
| Distillation (350°C) (% v/v) | 96.5 | 96.5 | 96.8 | 96.7 | 96.1 |
| Distillation (95% vol.) (v/v) | 347 | 347 | 344 | 343 | 349 |
| HFRR (µm) | 343 | 343 | 256 | 313 | 366 |

Table 4 provides additional examples having increased content of the GTL component, and decreased content of B₀ Diesel component (examples 6-8). Properties for examples 6-9 are provided in Table 5.

**Table 4. Examples 6-9.**

| In Table 4 below, EHN means ethyl hexyl nitrate. | | | | |
|---|---|---|---|---|
| Example | Ex.6 | Ex.7 | Ex.8 | Ex.9 |
| BO Diesel (vol.%) | -- | -- | -- | 65 |
| Naphthenic base oil (vol.%) | -- | 25 | 25 | 25 |
| GTL (vol.%) | 90 | 65 | 65 | -- |
| HVO (vol.%) | 10 | 10 | 10 | 10 |
| Detergent (ppm) | 1156 | 1156 | 1156 | 1156 |
| Lubricity additve (ppm) | 300 | 300 | 300 | 300 |
| EHN (ppm) | -- | -- | 1500 | 1500 |

**Table 5. Properties for Examples 6-9.**

| Property | Ex.6 | Ex.7 | Ex.8 | Ex.9 |
|---|---|---|---|---|
| Cetane Number | 76 | 70.1 | 74 | 60.3 |
| Density (at 15°C) (kg/m³) | 776 | 801 | 801 | 841 |
| Viscosity (at 40°C) (cSt) | 2.51 | 3.17 | 3.14 | 4.13 |
| Distillation (250°C) (% v/v) | 37.9 | 25.5 | 25.2 | 9.4 |
| Distillation (350°C) (% v/v) | -- | -- | -- | 95.3 |
| Distillation (95% vol.) (°C) | 328 | 338 | 338 | 349 |
| HFRR (µm) | 349 | 344 | 277 | 290 |

As is understood in the art, not all equipment or apparatuses are shown in the figures. For example, one of skill in the art would recognize that various holding tanks and/or pumps may be employed in the present method.

The singular forms "a", "an" and "the" include plural referents, unless the context clearly dictates otherwise.

Optional or optionally means that the subsequently described event or circumstances may or may not occur. The description includes instances where the event or circumstance occurs and instances where it does not occur.

Ranges may be expressed herein as from about one particular value, and/or to about another particular value. When such a range is expressed, it is to be understood that another embodiment is from the one particular value and/or to the other particular value, along with all combinations within said range.

Throughout this application, where patents or publications are referenced, the disclosures of these references in their entireties are intended to be incorporated by reference into this application, in order to more fully describe the state of the art to which the invention pertains, except when these reference contradict the statements made herein.

As used herein, recitation of the term about and approximately with respect to a range of values should be interpreted to include both the upper and lower end of the recited range.

Although the present invention has been described in detail, it should be understood that various changes, substitutions, and alterations can be made hereupon without departing from the principle and scope of the invention. Accordingly, the scope of the present invention should be determined by the following claims and their appropriate legal equivalents.

## Claims

1. A fuel composition is provided comprising a hydrocarbon blend, the hydrocarbon blend comprising: (a) between 60 and 70 vol% of Fischer-Tropsch derived fuel component, (b) between 20 and 30 vol% of a naphthenic base oil, and (c) between 9 and 11 vol% of a bio-derived diesel component, said fuel composition having a cetane number of at least 68.

2. The fuel composition of claim 1 further comprising between 1000 and 2000 mg/kg of a cetane enhancer.

3. The fuel composition of any of the previous claims wherein component (a) is present in an amount between 62 and 68 vol%.

4. The fuel composition of any of the previous claims wherein component (b) is present in an amount between 22 and 28 vol%.

5. The fuel composition of any of the previous claims wherein component (c) is present in an amount between 9.5 and 10.5 vol%.

6. The fuel composition of any of the previous claims wherein component (a) comprises at least 95 wt% paraffins.

7. The fuel composition of any of the previous claims wherein component (a) comprises a sulfur content of 2 ppmw or less.

8. The fuel composition of any of the previous claims wherein component (c) is a hydrogenated vegetable oil.

9. The fuel composition of any of the previous claims wherein the fuel composition has a kinematic viscosity at 40°C of greater than 3.0 cSt (mm²/s).

10. The fuel composition of any of the previous claims wherein the fuel composition has a density at 15°C of from 780 and 845 kg/m³.

11. The fuel composition of any of the previous claims wherein the cetane enhancer is ethylhexyl nitrate.

12. Use of the fuel composition of any of the previous claims in a direct injection engine.

13. Method for the preparation of a fuel composition, the method comprising blending (a) between 60 and 70 vol% of a Fischer-Tropsch derived fuel component; (b) between 20 and 30 vol% of a naphthenic base oil, and (c) between 9 and 11 vol% of a bio-derived diesel component to produce a diesel fuel composition having a density of at least 780 kg/m³ and a cetane number of at least 68.
